# EUROPÄISCHE PATENTSCHRIFT

(11) **EP 3 775 634 B1**
(45) Veröffentlichungstag und Bekanntmachung des Hinweises auf die Patenterteilung: **16.03.2022**
(21) Anmeldenummer: 19701966.4
(22) Anmeldetag: 17.01.2019
(51) Int. Cl.: F16C 19/08, F16J 15/3232, F16J 15/3256, F16J 15/3208, F16C 33/78

(54) **ANORDNUNG MIT MASCHINENELEMENTEN UND DICHTUNGSANORDNUNG HIERFÜR**
ARRANGEMENT HAVING MACHINE ELEMENTS AND SEALING ARRANGEMENT THEREFOR
ENSEMBLE COMPRENANT DES ÉLÉMENTS DE MACHINE ET ENSEMBLE D'ÉTANCHÉITÉ POUR CELUI-CI

(30) Priorität: 04.04.2018 DE 102018107873
(43) Veröffentlichungstag der Anmeldung: 17.02.2021
(73) Patentinhaber: Schaeffler Technologies AG & Co. KG, 91074 Herzogenaurach (DE)
(72) Erfinder: SILVA, Thomas Nogueira da, 18170000 Piedade (BR); OLIVEIRA, Murilo Cesar Ponce, 18086-200 Sorocaba (BR)
(86) Internationale Anmeldenummer: PCT/DE2019/100043
(87) Internationale Veröffentlichungsnummer: WO 2019/192639

(56) Entgegenhaltungen:
- EP-A1- 0 785 369
- DE-U1- 8 800 382
- JP-A- H1 113 891
- JP-A- 2013 242 033
- KR-U- 20080 002 256

## Beschreibung

### Gebiet der Erfindung

Die vorliegende Erfindung betrifft zunächst eine Dichtungsanordnung zur Abdichtung eines Raumes zwischen einem ersten Maschinenelement und einem zweiten Maschinenelement. Das erste Maschinenelement und das zweite Maschinenelement sind um eine Rotationsachse relativ zueinander rotierbar. Die Dichtungsanordnung umfasst eine Schleuderscheibe und einen elastischen Dichtungsring, wobei der Dichtungsring eine erste umlaufende Dichtlippe aufweist, die eine radial nach innen gerichtete umlaufende erste Dichtkante und eine axial nach außen gerichtete umlaufende zweite Dichtkante umfasst. Die Erfindung betrifft im Weiteren eine Anordnung mit einem ersten Maschinenelement und mit einem zweiten Maschinenelement sowie mit der erfindungsgemäßen Dichtungsanordnung. Bei der Anordnung handelt es sich bevorzugt um ein abgedichtetes Wälzlager, welches für die Verwendung in einem landwirtschaftlichen Nutzfahrzeug oder in einer landwirtschaftlichen Maschine ausgebildet ist.

### Hintergrund der Erfindung

In der DE 10 2011 077 729 A1 wird eine Wälzlagerdichtung mit einer elastomerbasierten Vordichtung beschrieben. Die Dichtungsanordnung ist insbesondere eine Kassettendichtung mit einem Trägerring mit mindestens einer Dichtlippe und einem Abdeckring. Die Dichtlippe bildet einen ständig schleifenden Dichtkontakt an dem Abdeckring. Weiterhin weist der an einem radial ausgerichteten Trägerringteil angeordnete elastische Teil einen axialen Überstand auf, der ein radiales Endstück des Abdeckrings zumindest teilweise abdeckt. Der Überstand übernimmt teilweise die Dichtfunktion.

Die DE 10 2010 019 442 A1 zeigt ein Wälzlager mit einer integrierten Abdichtung, welche eine ringförmige Dichtscheibe mit elastischen Eigenschaften umfasst, die mit einem ersten Rand in eine Haltenut an einem der Lagerringe eingesetzt ist und mit einem zweiten Rand gleitend in eine Dichtnutanordnung am anderen Lagerring eingreift. Um die Dichtscheibe gegen eine Verformung zu sichern, kann die Dichtscheibe in einem an den ersten Rand sich anschließenden Bereich durch eine Armierung verstärkt und versteift werden, während der verbleibende Bereich des Dichtringes weiterhin elastisch ausgebildet ist.

In der DE 10 2009 012 076 A1 ist eine Dichtungsanordnung für ein Wälzlager mit mindestens einem eine Laufbahn zum Abwälzen von Wälzkörpern aufweisenden Laufbahnring beschrieben. Die Dichtungsanordnung umfasst eine Dichtungsscheibe, welche den Wälzkörperraum in einer axialen Richtung der Dichtungsanordnung abdichtet. Im Laufbahnring ist ein Einstichbereich angeordnet, in welchem die Dichtungsscheibe selbsthaltend oder selbstklemmend angeordnet ist. Die Auflagefläche und die Laufbahn überlappen sich zumindest abschnittsweise in radialer Richtung der Drehachse des Wälzlagers. Die Dichtungsscheibe kann als eine berührende Dichtung, welche an einer Gegendichtungsfläche gegenüberliegend zu dem mindestens einen Laufbahnring anliegt, ausgebildet sein.

In der DE 10 2008 030 710 A1 ist eine Kassettendichtung beschrieben, welche zwischen zwei koaxial angeordneten und relativ zueinander rotierbaren Elementen einer Baugruppe angeordnet ist und zur Abdichtung eines Innenraumes der Baugruppe dient. Die Kassettendichtung besteht aus einer in axialer Richtung innen liegend angeordneten Dichtscheibe und einer in axialer Richtung außen liegend angeordneten Schleuderscheibe. Die Schleuderscheibe weist einen L-förmigen Querschnitt auf. Die Dichtscheibe und die Schleuderscheibe besitzen axiale Erstreckungen, über welche sie fest mit dem jeweils zugeordneten Element der Baugruppe verbunden sind. Die Dichtscheibe weist mindestens eine Dichtlippe auf, welche zur Abdichtung des Innenraumes mit der Schleuderscheibe in Kontakt steht.

Die US 6,817,769 B2 zeigt eine Kassettendichtung für ein Wälzlager, welches eine Dichtscheibe und eine Schleuderscheibe mit L-förmigem Querschnitt umfasst. Die Dichtscheibe steht in Verbindung mit dem Außenring. Die Schleuderscheibe ist am Innenring befestigt und in axialer Richtung vor der Dichtscheibe angeordnet. Die Dichtscheibe weist eine sich in den Wälzkörperraum erstreckende radiale Erweiterung auf. Am Ende der radialen Erweiterung der Dichtscheibe sind drei Dichtlippen aus einem Elastomer angeordnet, von denen eine in axialer Richtung und zwei in radialer Richtung mit der Schleuderscheibe in Kontakt stehen.

KR 2008 0002256 U offenbart eine Dichtungsanordnung gemäß dem Oberbegriff des Anspruchs 1.

### Aufgabe der Erfindung

Die Aufgabe der vorliegenden Erfindung besteht ausgehend vom Stand der Technik darin, die Abdichtung zwischen zueinander rotierenden Maschinenelementen weiter zu verbessern, sodass das Eindringen von Verschmutzungen in einen Raum zwischen den Maschinenelementen in einem höheren Maße verhindert wird.

### Beschreibung der Erfindung

Erfindungsgemäß erfolgt die Lösung der Aufgabe durch eine Dichtungsanordnung gemäß dem beigefügten Anspruch 1 sowie durch eine Anordnung gemäß dem beigefügten nebengeordneten Anspruch 9.

Die erfindungsgemäße Dichtungsanordnung dient der Abdichtung eines Raumes gegenüber einem Äußeren. Die Dichtungsanordnung verhindert, dass Stoffe, wie beispielsweise Wasser, Partikel und andere Verschmutzungen von außen in den Raum gelangen. Der Raum wird zwischen einem ersten Maschinenelement und einem zweiten Maschinenelement aufgespannt. Das erste Maschinenelement und das zweite Maschinenelement sind relativ zueinander um eine gemeinsame Rotationsachse rotierbar. Nachfolgend angegebene Richtungen, insbesondere eine axiale Richtung, eine radiale Richtung und eine tangentiale bzw. umlaufende Richtung sind auf die Rotationsachse bezogen. Das erste Maschinenelement ist bevorzugt radial außen liegend angeordnet, während das zweite Maschinenelement bevorzugt radial innen liegend angeordnet ist.

Die Dichtungsanordnung umfasst eine in axialer Richtung in Bezug auf den abzudichtenden Raum außen liegend angeordnete Schleuderscheibe. Die Schleuderscheibe weist eine axiale Erweiterung auf, über welche sie am zweiten Maschinenelement festlegbar bzw. befestigbar ist. Die axiale Erweiterung weist bevorzugt die Grundform eines Hohlzylinders oder eines Zylindermantels auf, welcher koaxial zur Rotationsachse ist. Die Schleuderscheibe weist weiterhin einen sich von der axialen Erweiterung radial nach außen erstreckenden Bereich auf. Der sich radial erstreckende Bereich erstreckt sich bevorzugt ausgehend von der axialen Erweiterung radial nach außen. Der radial erstreckende Bereich bildet eine Schleuderfläche, die bevorzugt im Wesentlichen die Grundform eines Kreisringes hat.

Die Dichtungsanordnung umfasst weiterhin einen elastischen Dichtungsring, welcher bevorzugt in axialer Richtung innenliegend, d. h. unmittelbar vor dem abzudichtenden Raum angeordnet ist. Somit ist der Dichtungsring in axialer Richtung zwischen dem abzudichtenden Raum und der Schleuderscheibe angeordnet. Der elastische Dichtungsring ist zur bevorzugt dichten Befestigung am ersten Maschinenelement ausgebildet. Der elastische Dichtungsring besteht bevorzugt aus einem Elastomer und weist eine erste umlaufende Dichtlippe auf, die eine radial nach innen gerichtete umlaufende erste Dichtkante und eine axial nach außen gerichtete umlaufende zweite Dichtkante umfasst. Die radial nach innen gerichtete umlaufende erste Dichtkante ist bevorzugt an der axialen Erweiterung der Schleuderscheibe oder am zweiten Maschinenelement anliegbar. Die radial nach innen gerichtete umlaufende erste Dichtkante liegt bevorzugt an der axialen Erweiterung der Schleuderscheibe oder am zweiten Maschinenelement an. Die axial nach außen gerichtete umlaufende zweite Dichtkante ist an der Schleuderscheibe, bevorzugt an den sich radial erstreckenden Bereich der Schleuderscheibe anliegbar. Die axial nach außen gerichtete umlaufende zweite Dichtkante liegt bevorzugt an der Schleuderscheibe, bevorzugt an dem sich radial erstreckenden Bereich der Schleuderscheibe an.

Erfindungsgemäß umfasst der elastische Dichtungsring weiterhin eine zweite umlaufende Dichtlippe, die eine radial nach innen gerichtete umlaufende dritte Dichtkante und eine axial nach außen gerichtete umlaufende vierte Dichtkante aufweist, welche an der Schleuderscheibe anliegbar sind. Die radial nach innen gerichtete umlaufende dritte Dichtkante und die axial nach außen gerichtete umlaufende vierte Dichtkante liegen bevorzugt an der Schleuderscheibe, bevorzugt an dem sich radial erstreckenden Bereich der Schleuderscheibe an.

Ein besonderer Vorteil der erfindungsgemäßen Dichtungsanordnung besteht darin, dass sie mindestens vier umlaufende Dichtkanten aufweist, welche in einem sehr hohen Maße verhindern, dass Verschmutzungen in den abzudichtenden Raum gelangen.

Bei bevorzugten Ausführungsformen der erfindungsgemäßen Dichtungsanordnung weist der Dichtungsring weiterhin eine radial nach innen gerichtete umlaufende Abstreiflippe auf, welche in axialer Richtung bevorzugt innen vor der ersten Dichtlippe angeordnet ist, sodass sie unmittelbar vor dem abzudichtenden Raum angeordnet ist. Die Abstreiflippe ist bevorzugt am zweiten Maschinenelement anliegbar und umgibt dieses umfänglich. Ein besonderer Vorteil dieser Ausführungsform der erfindungsgemäßen Dichtungsanordnung besteht darin, dass sie mindestens fünf umlaufende Dichtkanten einschließlich der Abstreiflippe aufweist, welche in einem noch höheren Maße verhindern, dass Verschmutzungen in den abzudichtenden Raum gelangen. Die Abstreiflippe ist bevorzugt axial benachbart zu der ersten Dichtlippe und bezogen auf die axiale Richtung innen liegend angeordnet.

Bei bevorzugten Ausführungsformen der erfindungsgemäßen Dichtungsanordnung weist die erste Dichtlippe eine umlaufende Führungsringaufnahme auf, welche in radialer Richtung über der radial nach innen gerichteten umlaufenden ersten Dichtkante angeordnet ist. Die Führungsringaufnahme ist bevorzugt in axialer Richtung neben der axial nach außen gerichteten umlaufenden zweiten Dichtkante angeordnet. Die Führungsringaufnahme ist bevorzugt durch eine umlaufende Mulde oder eine umlaufende Nut gebildet. Diese bevorzugten Ausführungsformen umfassen weiterhin einen ersten Führungsring, welcher in der Führungsringaufnahme der ersten Dichtlippe sitzt. Durch den ersten Führungsring ist die radial nach innen gerichtete umlaufende erste Dichtkante in radialer Richtung nach innen und die axial nach außen gerichtete umlaufende zweite Dichtkante in axialer Richtung nach außen gepresst.

Bei bevorzugten Ausführungsformen der erfindungsgemäßen Dichtungsanordnung weist die zweite Dichtlippe eine umlaufende Führungsringaufnahme auf, welche in radialer Richtung über der radial nach innen gerichteten umlaufenden dritten Dichtkante angeordnet ist. Die Führungsringaufnahme ist bevorzugt in axialer Richtung neben der axial nach außen gerichteten umlaufenden vierten Dichtkante angeordnet. Die Führungsringaufnahme ist bevorzugt durch eine umlaufende Mulde oder eine umlaufende Nut gebildet. Diese bevorzugten Ausführungsformen umfassen weiterhin einen zweiten Führungsring, welcher in der Führungsringaufnahme der zweiten Dichtlippe sitzt. Durch den zweiten Führungsring ist die radial nach innen gerichtete umlaufende dritte Dichtkante in radialer Richtung nach innen und die axial nach außen gerichtete umlaufende dritte Dichtkante in axialer Richtung nach außen gepresst.

Der erste Führungsring oder/und der der zweite Führungsring bestehen bevorzugt jeweils aus einem elastischen Material und üben bevorzugt jeweils eine Kraft in radialer Richtung nach innen und eine Kraft in axialer Richtung aus. Der erste Führungsring und der zweite Führungsring bestehen bevorzugt jeweils aus einem Federstahl.

Ein Querschnitt, welcher in einer die Rotationsachse umfassenden Ebene liegt und den ersten Führungsring schneidet, weist bevorzugt eine Kreisringform auf. Ein Querschnitt, welcher in einer die Rotationsachse umfassenden Ebene liegt und den zweiten Führungsring schneidet, weist bevorzugt eine Kreisringform auf.

Die Schleuderscheibe weist bevorzugt einen ersten L-profilförmigen umlaufenden Abschnitt auf. Ein Querschnitt, welcher in einer die Rotationsachse umfassenden Ebene liegt und die Schleuderscheibe schneidet, weist entsprechend die erste L-Profilform auf. Die erste Dichtlippe ist in dem ersten L-profilförmigen umlaufenden Abschnitt der Schleuderscheibe anliegbar und liegt bevorzugt dort an. Der erste L-profilförmige umlaufende Abschnitt der Schleuderscheibe ist bevorzugt durch die axiale Erweiterung der Schleuderscheibe und durch einen radial innen angeordneten umlaufenden Teil des sich radial nach außen erstreckenden Bereiches der Schleuderscheibe gebildet.

Die Schleuderscheibe weist in ihrem sich radial nach außen erstreckenden Bereich bevorzugt auch einen zweiten L-profilförmigen umlaufenden Abschnitt auf. Ein Querschnitt, welcher in einer die Rotationsachse umfassenden Ebene liegt und die Schleuderscheibe schneidet, weist entsprechend auch die zweite L-Profilform auf. Die zweite Dichtlippe ist in dem zweiten L-profilförmigen umlaufenden Abschnitt der Schleuderscheibe anliegbar und liegt bevorzugt dort an. Der zweite L-profilförmige umlaufende Abschnitt ist in radialer Richtung über dem ersten L-profilförmigen umlaufenden Abschnitt angeordnet. Der erste L-profilförmige umlaufende Abschnitt und der zweite L-profilförmige umlaufende Abschnitt weisen jeweils einen liegenden Schenkel ihrer L-Profilform auf, welcher parallel zur Rotationsachse angeordnet ist oder geringfügig in einem Winkel von höchstens 30° zur Rotationsachse geneigt ist. Der erste L-profilförmige umlaufende Abschnitt und der zweite L-profilförmige umlaufende Abschnitt weisen jeweils einen stehenden Schenkel ihrer L-Profilform auf, welcher in radialer Richtung angeordnet ist oder geringfügig in einem Winkel von höchstens 30° zur radialen Richtung geneigt ist.

Die radial nach innen gerichtete umlaufende erste Dichtkante der ersten Dichtlippe ist bevorzugt an den liegenden Schenkel der L-Profilform des ersten L-profilförmigen umlaufenden Abschnittes der Schleuderscheibe anliegbar und liegt bevorzugt dort an. Die axial nach außen gerichtete umlaufende zweite Dichtkante der ersten Dichtlippe ist bevorzugt an den stehenden Schenkel der L-Profilform des ersten L-profilförmigen umlaufenden Abschnittes der Schleuderscheibe anliegbar und liegt bevorzugt dort an.

Die radial nach innen gerichtete umlaufende dritte Dichtkante der zweiten Dichtlippe ist bevorzugt an den liegenden Schenkel der L-Profilform des zweiten L-profilförmigen umlaufenden Abschnittes der Schleuderscheibe anliegbar und liegt bevorzugt dort an. Die axial nach außen gerichtete umlaufende vierte Dichtkante der zweiten Dichtlippe ist bevorzugt an den stehenden Schenkel der L-Profilform des zweiten L-profilförmigen umlaufenden Abschnittes der Schleuderscheibe anliegbar und liegt bevorzugt dort an.

Die Dichtungsanordnung umfasst bevorzugt eine Armierung, auf welche der elastische Dichtungsring aufgebracht ist, sodass die Armierung den elastischen Dichtungsring bewehrt. Die Armierung besteht bevorzugt aus einem Metall. Die Armierung besitzt bevorzugt eine Kreisringform. Die Armierung ist bevorzugt in axialer Richtung innenliegend vor dem Dichtungsring angeordnet. Die Armierung ist bevorzugt dazu ausgebildet, in einer radial nach innen gerichteten umlaufenden Nut des ersten Maschinenelementes befestigt zu werden; beispielsweise durch Einpressen. Der elastische Dichtungsring weist an seinem radial äußeren Ende bevorzugt eine umlaufende elastische Klemmwulst auf, die auf der Armierung sitzt. Die elastische Klemmwulst verklemmt den elastischen Dichtungsring mit der Armierung in der radial nach innen gerichteten umlaufenden Nut des ersten Maschinenelementes.

Die erfindungsgemäße Anordnung umfasst ein erstes Maschinenelement und ein zweites Maschinenelement, die relativ zueinander um eine Rotationsache rotierbar sind. Die erfindungsgemäße Anordnung umfasst weiterhin die erfindungsgemäße Dichtungsanordnung zur Abdichtung eines Raumes zwischen dem erstem Maschinenelement und dem zweitem Maschinenelement. Der elastische Dichtungsring ist am ersten Maschinenelement befestigt. Die Schleuderscheibe ist am zweiten Maschinenelement befestigt. Die erfindungsgemäße Anordnung umfasst bevorzugt eine der beschrieben bevorzugten Ausführungsformen der erfindungsgemäßen Dichtungsanordnung. Im Übrigen weist die erfindungsgemäße Anordnung bevorzugt auch Merkmale auf, die im Zusammenhang mit der erfindungsgemäßen Dichtungsanordnung beschrieben sind.

Die Schleuderscheibe weist an ihrem radial äußeren Ende bevorzugt eine umlaufende Abschlusskante auf. Zwischen der Abschlusskante und dem ersten Maschinenelement ist bevorzugt ein umlaufender Luftspalt ausgebildet, sodass eine berührungslose Dichtung gebildet ist. Der Luftspalt weist bevorzugt nur eine geringe Breite auf, sodass keine größeren Partikel durch den Luftspalt gelangen können.

Nach einer besonders bevorzugten Ausführungsform der erfindungsgemäßen Anordnung sind das erste und das zweite Maschinenelement Lagerringe eines Wälzlagers, sodass die erfindungsgemäße Anordnung ein abgedichtetes Wälzlager bildet. Das erste Maschinenelement ist bevorzugt ein Außenring des Wälzlagers. Das zweite Maschinenelement ist bevorzugt ein Innenring des Wälzlagers. Der abzudichtende Raum ist bei dieser Ausführungsform zumindest teilweise durch einen zur Aufnahme von Wälzkörpern dienenden Innenraum gebildet. Die Dichtungsanordnung ist bevorzugt an einem axialen Ende des Wälzlagers angeordnet. Die Dichtungsanordnung kann darüber hinaus aber auch in andere Lagertypen eingebaut sein.

Das Wälzlager ist bevorzugt für die Verwendung in einem landwirtschaftlichen Nutzfahrzeug oder in einer landwirtschaftlichen Maschine ausgebildet. Bei der landwirtschaftlichen Maschine handelt es sich bevorzugt um eine Pflanzmaschine oder um eine Sämaschine. Landwirtschaftliche Nutzfahrzeuge bzw. landwirtschaftliche Maschinen werden im Einsatz besonders stark durch Staub, Partikel, Schmutz usw. belastet, sodass das erfindungsgemäße Wälzlager mit der verbesserten Abdichtwirkung der erfindungsgemäßen Dichtungsanordnung besonders vorteilhaft ist.

### Kurze Beschreibung der Zeichnungen

Weitere Vorteile, Einzelheiten und Weiterbildungen der vorliegenden Erfindung ergeben sich aus der nachfolgenden Beschreibung einer bevorzugten Ausführungsform, unter Bezugnahme auf die beigefügten Zeichnungen. Es zeigen:
- Figur 1: eine Querschnittsansicht einer bevorzugten Ausführungsform ei-ner erfindungsgemäßen Anordnung mit einer erfindungsgemäßen Dichtungsanordnung;
- Figur 2: eine Detailansicht der in Figur 1 gezeigten Anordnung; und
- Figur 3: eine Detailansicht eines in Figur 1 gezeigten Dichtungsringes.

### Ausführliche Beschreibung der Zeichnungen

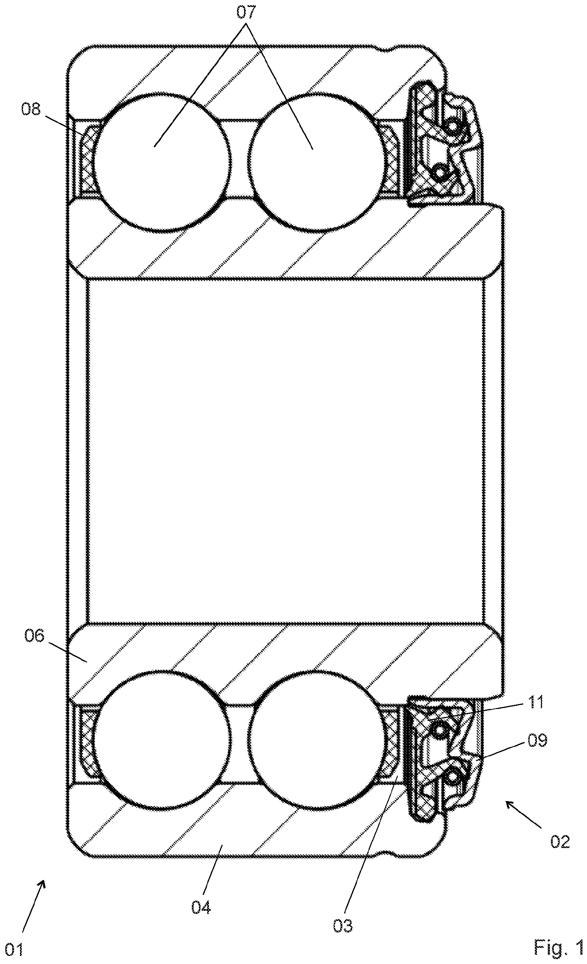

Figur 1 zeigt eine Querschnittsansicht einer bevorzugten Ausführungsform einer erfindungsgemäßen Anordnung 01 mit einer erfindungsgemäßen Dichtungsanordnung 02. Bei der Anordnung handelt es sich um ein abgedichtetes Wälzlager 01 mit einem Lagerinnenraum 03, welcher durch die Dichtungsanordnung 02 abgedichtet ist. Das Wälzlager 01 umfasst einen Lageraußenring 04 und einen Lagerinnenring 06, zwischen denen Wälzkörper 07 in Form von Kugeln angeordnet sind, welche von einem Käfig 08 geführt sind.

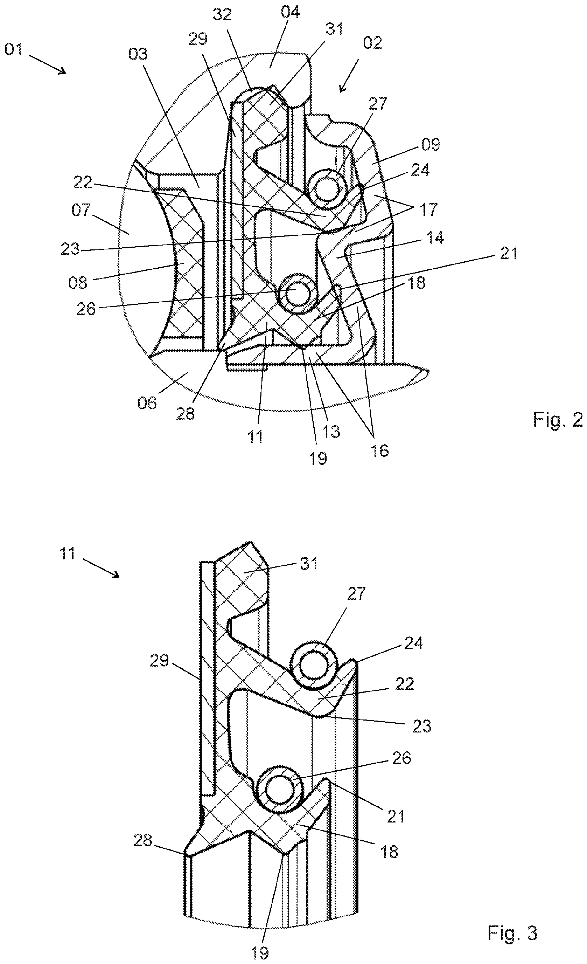

Die Dichtungsanordnung 02 umfasst eine Schleuderscheibe 09, welche fest und dicht auf dem Lagerinnenring 06 sitzt. Die Dichtungsanordnung 02 umfasst weiterhin einen elastischen Dichtungsring 11, welcher fest und dicht in dem Lageraußenring 04 sitzt. Die Schleuderscheibe 09 und der Dichtungsring 11 sind im Detail in Figur 2 gezeigt.

Figur 2 zeigt eine Detailansicht des in Figur 1 gezeigten abgedichteten Wälzlagers 01. Die Schleuderscheibe 09 umfasst eine axiale Erweiterung 13, mit welcher sie auf dem Lagerinnenring 06 sitzt. Ausgehend von der axialen Erweiterung 13 erstreckt sich in radialer Richtung ein umfänglich ausgebildeter Bereich 14. Am Übergang von der axialen Erweiterung 13 zu dem sich in radialer Richtung erstreckenden Bereich 14 ist ein erster L-profilförmiger Abschnitt 16 der Schleuderscheibe 09 ausgebildet. In radialer Richtung über dem ersten L-profilförmigen Abschnitt 16 der Schleuderscheibe 09 ist ein zweiter L-profilförmiger Abschnitt 17 in dem sich in radialer Richtung erstreckenden Bereich 14 der Schleuderscheibe 09 ausgebildet.

Der elastische Dichtungsring 11 umfasst eine erste umlaufende Dichtlippe 18, die eine radial nach innen gerichtete umlaufende erste Dichtkante 19 und eine axial nach außen gerichtete umlaufende zweite Dichtkante 21 aufweist. Die radial nach innen gerichtete umlaufende erste Dichtkante 19 und die axial nach außen gerichtete umlaufende zweite Dichtkante 21 liegen an der Schleuderscheibe 09 in deren ersten L-profilförmigen Abschnitt 16 an.

Der elastische Dichtungsring 11 umfasst weiterhin eine zweite umlaufende Dichtlippe 22, die eine radial nach innen gerichtete umlaufende dritte Dichtkante 23 und eine axial nach außen gerichtete umlaufende vierte Dichtkante 24 aufweist. Die radial nach innen gerichtete umlaufende dritte Dichtkante 23 und die axial nach außen gerichtete umlaufende vierte Dichtkante 24 liegen an der Schleuderscheibe 09 in deren zweiten L-profilförmigen Abschnitt 17 an.

Die erste umlaufende Dichtlippe 18 wird durch einen ersten Führungsring 26 aus einem Federstahl radial nach innen und in axialer Richtung gepresst. Die zweite umlaufende Dichtlippe 22 wird durch einen zweiten Führungsring 27 aus einem Federstahl radial nach innen und in axialer Richtung gepresst.

Der elastische Dichtungsring 11 umfasst weiterhin eine radial nach innen gerichtete umlaufende Abstreiflippe 28, welche umlaufend am Lagerinnenring 06 anliegt.

Die Dichtungsanordnung 02 umfasst weiterhin eine Armierung 29, auf welche der elastische Dichtungsring 11 aufgebracht ist und diesen bewehrt. Die Armierung 29 besteht aus einem Metall und besitzt eine Kreisringform. Der elastische Dichtungsring 11 weist an seinem radial äußeren Ende eine umlaufende elastische Klemmwulst 31 auf. Die elastische Klemmwulst 31 verklemmt den elastischen Dichtungsring 11 mit der Armierung 29 in einer radial nach innen gerichteten umlaufenden Nut 32, die in dem Lageraußenring 04 ausgebildet ist, wodurch der elastische Dichtungsring 11 in dem Lageraußenring 04 befestigt ist.

Figur 3 zeigt eine Detailansicht des in Figur 1 und in Figur 2 gezeigten Dichtungsringes 11. Es sind insbesondere die erste umlaufende Dichtlippe 18 mit der radial nach innen gerichteten umlaufenden ersten Dichtkante 19 und der axial nach außen gerichteten umlaufenden zweiten Dichtkante 21 sowie die zweite umlaufende Dichtlippe 22 mit der radial nach innen gerichteten umlaufenden dritten Dichtkante 23 und der axial nach außen gerichteten umlaufenden vierten Dichtkante 24 dargestellt.

### Bezugszeichenliste

- 01: Wälzlager
- 02: Dichtungsanordnung
- 03: Lagerinnenraum
- 04: Lageraußenring
- 05: -
- 06: Lagerinnenring
- 07: Wälzkörper
- 08: Käfig
- 09: Schleuderscheibe
- 10: -
- 11: Dichtungsring
- 12: -
- 13: axiale Erweiterung
- 14: in radialer Richtung erstreckender Bereich
- 15: -
- 16: erster L-profilförmiger Abschnitt
- 17: zweiter L-profilförmiger Abschnitt
- 18: erste umlaufende Dichtlippe
- 19: radial nach innen gerichtete umlaufende erste Dichtkante
- 20: -
- 21: axial nach außen gerichtete umlaufende zweite Dichtkante
- 22: zweite umlaufende Dichtlippe
- 23: radial nach innen gerichtete umlaufende dritte Dichtkante
- 24: axial nach außen gerichtete umlaufende vierte Dichtkante
- 25: -
- 26: erster Führungsring
- 27: zweiter Führungsring
- 28: umlaufende Abstreiflippe
- 29: Armierung
- 30: -
- 31: Klemmwulst
- 32: Nut

## Patentansprüche

1. Dichtungsanordnung (02) zur Abdichtung eines Raumes (03) zwischen einem ersten Maschinenelement (04) und einem zweiten Maschinenelement (06), wobei das erste Maschinenelement (04) und das zweite Maschinenelement (06) um eine Rotationsachse relativ zueinander rotierbar sind; und wobei die Dichtungsanordnung (02) folgende Komponenten umfasst:
- eine in axialer Richtung außen liegend angeordnete Schleuderscheibe (09) mit einer axialen Erweiterung (13), über welche sie am zweiten Maschinenelement (06) festlegbar ist, und einem sich von der axialen Erweiterung (13) radial erstreckenden Bereich (14); und
- einen elastischen Dichtungsring (11) zur Befestigung am ersten Maschinenelement (04), wobei der Dichtungsring (11) eine erste umlaufende Dichtlippe (18) aufweist, die eine radial nach innen gerichtete umlaufende erste Dichtkante (19) und eine axial nach außen gerichtete umlaufende zweite Dichtkante (21) umfasst, welche an der Schleuderscheibe (09) anliegbar ist;
wobei der Dichtungsring (11) weiterhin eine zweite umlaufende Dichtlippe (22) aufweist, welche in radialer Richtung über der ersten Dichtlippe (18) angeordnet ist, wobei die zweite Dichtlippe (22) eine radial nach innen gerichtete umlaufende dritte Dichtkante (23) umfasst, die an der Schleuderscheibe (09) anliegbar ist, **dadurch gekennzeichnet, dass** die zweite Dichtlippe (22) weiterhin eine axial nach außen gerichtete umlaufende vierte Dichtkante 13(24) umfasst, welche an der Schleuderscheibe (09) anliegbar ist.

2. Dichtungsanordnung (02) nach Anspruch 1, **dadurch gekennzeichnet, dass** der Dichtungsring (11) weiterhin eine radial nach innen gerichtete umlaufende Abstreiflippe (28) aufweist, welche in axialer Richtung innen vor der ersten Dichtlippe (18) angeordnet ist.

3. Dichtungsanordnung (02) nach Anspruch 1 oder 2, **dadurch gekennzeichnet, dass** die erste Dichtlippe (18) eine umlaufende Führungsringaufnahme aufweist, welche in radialer Richtung über der radial nach innen gerichteten umlaufenden ersten Dichtkante (19) angeordnet ist, wobei in der Führungsringaufnahme der ersten Dichtlippe (18) ein erster Führungsring (26) sitzt, durch welchen die radial nach innen gerichtete umlaufende erste Dichtkante (19) in radialer Richtung nach innen und die axial nach außen gerichtete umlaufende zweite Dichtkante (21) in axialer Richtung nach außen gepresst ist.

4. Dichtungsanordnung (02) nach einem der Ansprüche 1 bis 3, **dadurch gekennzeichnet, dass** die zweite Dichtlippe (22) eine umlaufende Führungsringaufnahme aufweist, welche in radialer Richtung über der radial nach innen gerichteten umlaufenden dritten Dichtkante (23) angeordnet ist, wobei in der Führungsringaufnahme der zweiten Dichtlippe (22) ein zweiter Führungsring (27) sitzt, durch welchen die radial nach innen gerichtete umlaufende dritte Dichtkante (23) in radialer Richtung nach innen und die axial nach außen gerichtete umlaufende vierte Dichtkante (24) in axialer Richtung nach außen gepresst ist.

5. Dichtungsanordnung (02) nach Anspruch 3 oder 4, **dadurch gekennzeichnet, dass** der erste Führungsring (26) oder/und der zweite Führungsring (27) jeweils aus einem elastischen Material bestehen.

6. Dichtungsanordnung (02) nach einem der Ansprüche 3 bis 5, **dadurch gekennzeichnet, dass** ein Querschnitt durch den ersten Führungsring (26) in einer die Rotationsachse umfassenden Ebene eine Kreisringform aufweist, oder/und dass ein Querschnitt durch den zweiten Führungsring (27) in einer die Rotationsachse umfassenden Ebene eine Kreisringform aufweist.

7. Dichtungsanordnung (02) nach einem der Ansprüche 1 bis 6, **dadurch gekennzeichnet, dass** die erste Dichtlippe (18) in einem ersten L-profilförmigen umlaufenden Abschnitt (16) der Schleuderscheibe (09) anliegbar ist, und dass die zweite Dichtlippe (22) in einem zweiten L-profilförmigen umlaufenden Abschnitt (17) der Schleuderscheibe (09) anliegbar ist.

8. Dichtungsanordnung (02) nach Anspruch 7, **dadurch gekennzeichnet, dass** der zweite L-profilförmige Abschnitt (17) in radialer Richtung über dem ersten L-profilförmigen Abschnitt (16) angeordnet ist.

9. Anordnung (01), umfassend ein erstes Maschinenelement (04) und ein zweites Maschinenelement (06), welche relativ zueinander um eine Rotationsachse rotierbar sind, sowie eine Dichtungsanordnung (02) nach einem der Ansprüche 1 bis 8 zur Abdichtung eines Raumes (03) zwischen dem erstem Maschinenelement (04) und dem zweitem Maschinenelement (06).

10. Anordnung nach Anspruch 9, **dadurch gekennzeichnet, dass** sie durch ein Wälzlager (01) gebildet ist, wobei das erste Maschinenelement ein Außenring (04) des Wälzlagers (01) ist, wobei das zweite Maschinenelement ein Innenring (06) des Wälzlagers (01) ist, und wobei der abzudichtende Raum ein zur Aufnahme von Wälzkörpern (07) dienender Wälzkörperraum (03) des Wälzlagers (01) ist.

## Claims

1. A sealing arrangement (02) for sealing a space (03) between a first machine element (04) and a second machine element (06), wherein the first machine element (04) and the second machine element (06) are rotatable relative to one another about an axis of rotation; and wherein the sealing arrangement (02) comprises the following components:
- a centrifugal disc (09) arranged on the outside in the axial direction and having an axial extension (13) by means of which it can be fixed on the second machine element (06) and a region (14) extending radially from the axial extension (13); and
- an elastic sealing ring (11) for fastening to the first machine element (04), wherein the sealing ring (11) has a first circumferential sealing lip (18) which comprises a radially inwardly directed circumferential first sealing edge (19) and an axially outwardly directed circumferential second sealing edge (21) which can lie on the centrifugal disc (09);
wherein the sealing ring (11) further has a second circumferential sealing lip (22) which is arranged in the radial direction above the first sealing lip (18), wherein the second sealing lip (22) comprises a radially inwardly directed circumferential third sealing edge (23) which can lie on the centrifugal disc (09), **characterised in that** the second sealing lip (22) further comprises an axially outwardly directed circumferential fourth sealing edge (24) which can lie on the centrifugal disc (09).

2. The sealing arrangement (02) according to claim 1, **characterised in that** the sealing ring (11) further has a radially inwardly directed circumferential scraper lip (28) which is arranged in the axial direction in front of the first sealing lip (18).

3. The sealing arrangement (02) according to claim 1 or 2, **characterised in that** the first sealing lip (18) has a circumferential guide ring receptacle which is arranged in the radial direction over the radially inwardly directed circumferential first sealing edge (19), wherein a first guide ring (26) sits in the guide ring receptacle of the first sealing lip (18) through which guide ring the radially inwardly directed circumferential first sealing edge (19) is pressed inward in the radial direction and the axially outwardly directed circumferential second sealing edge (21) is pressed outward in the axial direction.

4. The sealing arrangement (02) according to any one of claims 1 to 3, **characterised in that** the second sealing lip (22) has a circumferential guide ring receptacle which is arranged in the radial direction over the radially inwardly directed circumferential third sealing edge (23), wherein a second guide ring (27) sits in the guide ring receptacle of the second sealing lip (22) through which guide ring the radially inwardly directed circumferential third sealing edge (23) is pressed inward in the radial direction and the axially outwardly directed circumferential fourth sealing edge (24) is pressed outward in the axial direction.

5. The sealing arrangement (02) according to claim 3 or 4, **characterised in that** the first guide ring (26) and/or the second guide ring (27) each consist of an elastic material.

6. The sealing arrangement (02) according to any one of claims 3 to 5, **characterised in that** a cross-section through the first guide ring (26) has a circular ring shape in a plane comprising the axis of rotation, and/or **in that** a cross-section through the second guide ring (27) has a circular ring shape in a plane comprising the axis of rotation.

7. The sealing arrangement (02) according to any one of claims 1 to 6, **characterised in that** the first sealing lip (18) can be lie in a first circumferential section shaped in an L-profile (16) of the centrifugal disc (09), and **in that** the second sealing lip (22) can lie in a second circumferential section shaped in an L-profile (17) of the centrifugal disc (09).

8. The sealing arrangement (02) according to claim 7, **characterised in that** the second section shaped in an L-profile (17) is arranged in the radial direction above the first section shaped in an L-profile (16).

9. An arrangement (01), comprising a first machine element (04) and a second machine element (06), which can be rotated relative to one another about an axis of rotation, as well as a sealing arrangement (02) according to any one of claims 1 to 8 for sealing a space (03) between the first machine element (04) and the second machine element (06).

10. The arrangement according to claim 9, **characterised in that** it is formed by a rolling bearing (01), wherein the first machine element is an outer ring (04) of the rolling bearing (01), wherein the second machine element is an inner ring (06) of the rolling bearing (01), and wherein the space to be sealed is a rolling element space (03) of the rolling bearing (01) which is used to receive rolling elements (07).

## Revendications

1. Ensemble d'étanchéité (02) pour étanchéifier un espace (03) entre un premier élément de machine (04) et un second élément de machine (06), le premier élément de machine (04) et le second élément de machine (06) pouvant tourner l'un par rapport à l'autre autour d'un axe de rotation ; et l'ensemble d'étanchéité (02) comprenant les composants suivants :
- un disque centrifuge (09) disposé extérieurement dans la direction axiale et comportant un prolongement axial (13) au moyen duquel il peut être fixé sur le second élément de machine (06) et une zone (14) s'étendant radialement à partir du prolongement axial (13) ; et
- une bague d'étanchéité élastique (11) à fixer sur le premier élément de machine (04), la bague d'étanchéité (11) présentant une première lèvre d'étanchéité périphérique (18) qui comprend un premier bord d'étanchéité périphérique (19) dirigé radialement vers l'intérieur et un deuxième bord d'étanchéité périphérique (21) dirigé axialement vers l'extérieur qui peut prendre appui contre le disque centrifuge (09) ;
la bague d'étanchéité (11) présentant en outre une seconde lèvre d'étanchéité périphérique (22) qui est disposée dans la direction radiale au-dessus de la première lèvre d'étanchéité (18), la seconde lèvre d'étanchéité (22) comprenant un troisième bord d'étanchéité périphérique (23) dirigé radialement vers l'intérieur qui peut prendre appui contre le disque centrifuge (09), **caractérisé en ce que** la seconde lèvre d'étanchéité (22) comprend en outre un quatrième bord d'étanchéité périphérique (24) dirigé axialement vers l'extérieur qui peut prendre appui contre le disque centrifuge (09).

2. Ensemble d'étanchéité (02) selon la revendication 1, **caractérisé en ce que** la bague d'étanchéité (11) présente en outre une lèvre racleuse périphérique (28) dirigée radialement vers l'intérieur qui est disposée dans la direction axiale devant la première lèvre d'étanchéité (18).

3. Ensemble d'étanchéité (02) selon la revendication 1 ou 2, **caractérisé en ce que** la première lèvre d'étanchéité (18) présente un logement de bague de guidage périphérique qui est disposé dans la direction radiale au-dessus du premier bord d'étanchéité périphérique (19) dirigé radialement vers l'intérieur, dans le logement de bague de guidage de la première lèvre d'étanchéité (18), une première bague de guidage (26) étant installée, à travers laquelle le premier bord d'étanchéité périphérique (19) dirigé radialement vers l'intérieur est pressé dans la direction radiale vers l'intérieur et le deuxième bord d'étanchéité périphérique (21) dirigé axialement vers l'extérieur est pressé dans la direction axiale vers l'extérieur.

4. Ensemble d'étanchéité (02) selon l'une quelconque des revendications 1 à 3, **caractérisé en ce que** la seconde lèvre d'étanchéité (22) présente un logement de bague de guidage périphérique qui est disposé dans la direction radiale au-dessus du troisième bord d'étanchéité périphérique (23) dirigé radialement vers l'intérieur, dans le logement de bague de guidage de la seconde lèvre d'étanchéité (22) se trouve une seconde bague de guidage (27) à travers laquelle le troisième bord d'étanchéité périphérique (23) dirigé radialement vers l'intérieur est pressé vers l'intérieur dans la direction radiale et le quatrième bord d'étanchéité périphérique (24) dirigé axialement vers l'extérieur est pressé dans la direction axiale vers l'extérieur.

5. Ensemble d'étanchéité (02) selon la revendication 3 ou 4, **caractérisé en ce que** la première bague de guidage (26) et/ou la seconde bague de guidage (27) sont chacune constituées d'un matériau élastique.

6. Ensemble d'étanchéité (02) selon l'une quelconque des revendications 3 à 5, **caractérisé en ce qu'**une section transversale à travers la première bague de guidage (26) présente une forme d'anneau circulaire dans un plan comprenant l'axe de rotation et/ou **en ce qu'**une section transversale à travers la seconde bague de guidage (27) présente une forme d'anneau circulaire dans un plan comprenant l'axe de rotation.

7. Ensemble d'étanchéité (02) selon l'une quelconque des revendications 1 à 6, **caractérisé en ce que** la première lèvre d'étanchéité (18) peut prendre appui dans une première section périphérique en forme de profilé en L (16) du disque centrifuge (09) et **en ce que** la seconde lèvre d'étanchéité (22) peut prendre appui dans une seconde section périphérique en forme de profilé en L (17) du disque centrifuge (09).

8. Ensemble d'étanchéité (02) selon la revendication 7, **caractérisé en ce que** la seconde section en forme de profilé en L (17) est disposée dans la direction radiale au-dessus de la première section en forme de profilé en L (16).

9. Ensemble (01) comprenant un premier élément de machine (04) et un second élément de machine (06) qui peuvent tourner l'un par rapport à l'autre autour d'un axe de rotation, ainsi qu'un ensemble d'étanchéité (02) selon l'une quelconque des revendications 1 à 8 pour étanchéifier un espace (03) entre le premier élément de machine (04) et le second élément de machine (06).

10. Ensemble selon la revendication 9, **caractérisé en ce qu'il** est formé par un roulement (01), le premier élément de machine étant une bague extérieure (04) du roulement (01), le second élément de machine étant une bague intérieure (06) du roulement (01) et l'espace à étanchéifier étant un espace d'éléments roulants (03) du roulement (01) servant à loger des éléments roulants (07).
